# EUROPEAN PATENT SPECIFICATION

(11) **EP 3 786 260 B1**
(45) Date of publication and mention of the grant of the patent: **15.12.2021**
(21) Application number: 19193824.0
(22) Date of filing: 27.08.2019
(51) Int. Cl.: C09K 11/77, H05B 33/14, H01B 1/06, H01M 4/02, H01G 11/04, H01G 11/06, H01G 11/50, H01M 4/58, H01M 10/0525, H01M 10/054

(54) **DOPED TIN-CARBODIIMIDE AND USE THEREOF IN ENERGY STORAGE SYSTEMS AND AS PHOSPHORS**
DOTIERTES ZINN-CARBODIIMID UND VERWENDUNG DAVON IN ENERGIESPEICHERSYSTEMEN UND ALS LEUCHTSTOFFE
ÉTAIN-CARBODIIMIDE DOPÉ ET SON UTILISATION DANS DES SYSTÈMES DE STOCKAGE D'ÉNERGIE ET EN TANT QUE PHOSPHORES

(43) Date of publication of application: 03.03.2021
(73) Proprietor: Karlsruher Institut für Technologie, 76131 Karlsruhe (DE)
(72) Inventor: Braun, Cordula, 64291 Darmstadt (DE)
(74) Representative: Müller-Boré & Partner Patentanwälte PartG mbB

(56) References cited:
- EP-A2- 2 583 990
- A. EGU?A-BARRIO ET AL: "Carbodiimides: new materials applied as anode electrodes for sodium and lithium ion batteries", JOURNAL OF MATERIALS CHEMISTRY A, vol. 4, no. 5, 6 January 2016 (2016-01-06) , pages 1608-1611, XP055293743, GB ISSN: 2050-7488, DOI: 10.1039/C5TA08945J
- SHUANGLONG YUAN ET AL: "Upconversion luminescent properties and mechanisms of bulk La2O2CN2: Er3+/Yb3+ phosphors", CERAMICS INTERNATIONAL., vol. 43, no. 17, 1 December 2017 (2017-12-01), pages 16018-16022, XP055659559, NL ISSN: 0272-8842, DOI: 10.1016/j.ceramint.2017.06.187
- MOULAY T. SOUGRATI ET AL: "Carbodiimides as energy materials: which directions for a reasonable future?", DALTON TRANSACTIONS, vol. 47, no. 32, 1 January 2018 (2018-01-01), pages 10827-10832, XP055659570, ISSN: 1477-9226, DOI: 10.1039/C8DT01846D

## Description

The present invention relates to novel carbodiimide compounds of the following formula Sn(CN₂):M^{X+} as well as to their use in energy storage systems and as phosphors. Further, the present invention also relates to novel methods for producing the carbodiimide Sn(CN₂) and subsequent doping steps.

The luminescence of inorganic materials is composed of the following processes: (1) absorption and excitation, (2) energy transfer, and (3) emission. Most luminescent materials consist of a so-called host material to which certain dopant ions, also termed activators, are added. In such cases, the host lattice plays two distinct roles: as a passive matrix to define the spatial locations of the activator ions; and as an active participant in the luminescence process, exerting its own specific influence on the spectroscopic behavior of the activator. In the latter, it helps to shape the structure of the energy levels of the activator and also introduces vibrations of various energies, the so-called phonons, which influence the kinetics of the luminescence phenomena.

Oxyamides, cyanamides and carbodiimides as a fundamental class of compounds have gained increasing attention within the past decade in the field of synthetic solid-state chemistry by revealing remarkably high thermal and chemical resistivity which makes them excellent candidates for luminescent host materials, which are commonly doped with rare-earth (RE) activator ions, i.e. RE²⁺ as well as RE³⁺. For instance, down conversion of blue light from InGaN LEDs (light-emitting diodes) by suitable color converters, especially phosphors, has become a dominant technique for producing white light for all kinds of applications. However, there are still some technical challenges to overcome.

Luminescent phosphors are usually doped with Eu²⁺, for instance, and only one activator ion can be used for one specific host material. Therefore, one host commonly shows only one color. Thus, different host materials applied as thin films are commonly used to achieve different colors. However, using different host materials commonly leads to structural misfits. In particular, since the host materials can have different coefficients of thermal expansion and due to different grid bias voltages of the host materials, multicolor LEDs often suffer from such structural problems.

Current battery technologies also suffer from a number of challenges, and search for novel high-performing electrode materials is still essential. In particular, the need to overcome the present limitations concerning electrode capacities is a great topic.

Solid-state carbodiimides of the general formula Mₓ(NCN)_{y} or Mₓ(CN₂)_{y}, where M is an alkali, an alkaline-earth, or a transition metal or a metalloid, are a class of inorganic compounds, among which CaNCN is best known and used as fertilizer or nitrogen source for the steel industry. Recently, other transition metal carbodiimides have been reported to be electrochemically active materials for electrochemical energy-storage systems, such as anode materials for sodium- and lithium ion batteries. In particular, E. Eguia-Barrio et al., J. Mater. Chem. A, 2016, 4, 1608-1611, and M. T. Sougrati et al., Angew. Chem. Int. Ed., 2016, 55, 5090-5095, reported that transition metal carbodiimides MCN₂ (M = Cu, Zn, Mn, Fe, Co, Ni and Cr) can be applied as negative electrode materials for lithium- and sodium ion batteries with very good cycling properties. In this report, the carbodiimides of copper (Cu), zinc, (Zn), manganese (Mn), iron (Fe), cobalt (Co), nickel (Ni), and chromium (Cr) have been prepared via different synthetic routes. The development of further carbodiimides has also been reported, and includes carbodiimides of rare earth, transition metal, and main group elements.

CN 106587160 A describes carbodiimide-based compounds of Mn, Fe, Co, Ni, and Cu having a MN₆ octahedral-dimensional plane and a two-dimensional slice through the C layer forming an alternating layer structure. The fact that absolutely no compound formula is given and that MN₆ octahedral-dimensional planes shall be the characteristic structural feature make it rather unlikely that CN 106587160 A relates to a compound of the carbodiimide group.

Further, WO 2012/010243 A1 describes carbodiimide compounds, a process for the preparation of these compounds and the use thereof as conversion phosphors or in lamps. In particular, WO 2012/010243 A1 describes a compound of the formula EA_{2-y}Si(CN₂)₄₋ₓOₓ:Eu_{y} (EA = Mg, Ca, Sr, Ba or Zn). This is an earth alkaline silicocarbodiimide.

On the other hand, WO 2016/198550 A1 describes several metal carbodiimides and metal cyanamides of the formula MₓM'_{y}(NCN)_{w} and their use as an active material for a negative electrode, where M is a metal selected from the group consisting of Cr, Fe, Co, Ni, Cu, Zn, Cd, Pb, Ag, Si, In, Ti and Sn; M' is a metal different from M and selected from the group consisting of Mn, Cr, Fe, Co, Ni, Cu, Zn, Cd, Pb, Ag, Si, In, Ti and Sn; 1 ≤ x + y ≤ 2; 1 ≤ w ≤ 3; 0 < x ≤ 2; 0 ≤ y ≤ 2; and the values of x, y and w are chosen such that the metal carbodiimide or the metal cyanamide is electronically neutral in view of the oxidation state(s) of the element or elements represented by M and M'. Examples of WO 2016/198550 A1 include FeCN₂, ZnCN₂, Cr₂(CN₂)₃, PbCN₂, and Fe_{0.8}Co_{0.2}CN₂. Even though tin (Sn) is listed among the metals, at that time SnCN₂ did not yet exist.

As summarized, for instance, in M. T. Sougrati et al., Dalt. Trans., 2018, 47, 10827-10832, different synthetic routes are necessary to prepare the different carbodiimides. For instance, X. Liu et al., Z. Naturforsch. B, 2005, 60, 593-596, have described a slow oxidation approach to prepare CuNCN from Cu₄(NCN)₂NH₃ at room temperature. The same compound was prepared by D. Koziej et al., J. Mater. Chem., 2009, 19, 5122-5124, following a non-aqueous soft chemistry approach via the reaction of copper chloride (CuCl₂) with cyanamide and benzylamine. Nevertheless, other routes are also described, such as the metathesis reaction involving the heating of a mixture comprising an appropriate metal carbodiimide or metal cyanamide and a chloride of another appropriate metal, or the decomposition under argon of a compound of formula M¹(NCNH)₂ (M¹being e.g. Ni, Co or Fe) as described in WO 2016/198550 A1.

While tin(II) thiocyanate Sn(SCN)₂ is identified for many years (cf. A. G. Filby et al., J. Chem. Soc. Dalt. Trans. 1978, 12, 1797-1799), just recently new attempts have been made to synthesize SnCN₂, which led to Sn₂O(CN)₂ as described in K. Dolabdjian et al., Dalton Trans., 2018, 47, 13378-13383. Most recently, M. Löber et al., Inorg. Chem., 2019, 58, 12, 7845-7851, reported for the first time the synthesis of Sn(CN₂) via the intermediate compound Sn₄Cl₂(CN₂)₃. The synthetic intermediate compound Sn₄Cl₂(CN₂)₃ is formed from SnCl₂ and Li₂(CN₂) at 200°C, and is described as a versatile precursor, because it can form Sn(CN₂) when reacted with Li₂(CN₂), or Sn₂O(CN₂) when reacted with Li₂(CN₂) and Na₂O. However, details on possible material properties of Sn(CN₂) are not given in said paper.

Based on the above, the object of the invention is to provide a novel material for highly efficient phosphors in modern LED-technology and for highly efficient electrode materials in energy storage systems.

According to the present invention, the above object is achieved by providing a carbodiimide compound of the following formula Sn(CN₂):M^{X+} as characterized in claim 1. The above object is also achieved by a method for producing the carbodiimide compound according to the present invention as well as by a method for producing Sn(CN₂) as characterized in claims 7 and 8, respectively. In addition, the above object is achieved by using Sn(CN₂) or the doped carbodiimide compound Sn(CN₂):M^{x+} according to the present invention as an electrode material in energy storage systems, or as a phosphor material in light-emitting diodes as characterized in claims 9 and 11, respectively. In addition, the above object is achieved by providing a multicolored light-emitting diode as characterized in claim 12. Preferred embodiments of the present invention are set out in the dependent claims.

Specifically, the present invention provides a carbodiimide compound of the following formula Sn(CN₂):M^{X+}, which is Sn(CN₂) doped with at least one dopant (M^{x+}). According to the present invention, the at least one dopant is selected from alkaline earth metals, lanthanoids, actinoids, transition metals, post-transition metals and metalloids (hereinafter also referred to as "dopant metal"). Sn is excluded as dopant. The term "X+" represents the oxidation state of the dopant, such as 2+ or 3+ etc., depending on the potential oxidation state of the dopant metal.

According to the present invention, alkaline earth metals encompass the elements of group 2 of the periodic table of elements (hereinafter also referred to as "periodic table"), i.e. beryllium (Be), magnesium (Mg), calcium (Ca), strontium (Sr), barium (Ba), and radium (Ra). Lanthanoids encompass the chemical elements with atomic numbers 57 through 71, i.e. lanthanum (La), cerium (Ce), praseodynium (Pr), neodynium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu). Actinoids encompass the chemical elements with atomic numbers 89 through 103, i.e. actinium (Ac), thorium (Th), protactinium (Pa), uranium (U), neptunium (Np), plutonium (Pu), americium (Am), curium (Cm), berkelium (Bk), californium (Cf), einsteinium (Es), fermium (Fm), mendelevium (Md), nobelium (No), and lawrencium (Lr). Transition metals encompass in accordance with the present invention any element in the d-block of the periodic table, which includes groups 3 to 12 of the periodic table (except for La and Ac). Post-transition metals encompass gallium (Ga), indium (In), thallium (TI), lead (Pb), and bismuth (Bi). Further, metalloids encompass boron (B), aluminium (Al), carbon (C), silicon (Si), germanium (Ge), arsenic (As), antimony (Sb), selenium (Se), tellurium (Te), polonium (Po), and astatine (At).

Preferably, the dopant is at least one rare earth (RE) activator ion selected from the group consisting of Sc, Y, Ce, Pr, Nd, Sm, Eu, Gd, Tb, Dy, Ho, Er, Tm, and Yb in its corresponding oxidation state. Among those RE activator ions, it is particularly preferred that Sn(CN₂) is doped with at least one selected from the group consisting of Eu and Tb.

Also, it is preferred that the dopant is at least one element selected from the group consisting of Mg, Si, Mn, Fe, Co, Ni, Cu, and Zn in its corresponding oxidation state.

According to the present invention, however, the dopant metal may not only be selected from the aforementioned ionic elements, but also from halogenated compounds of the alkaline earth metals, lanthanoids, actinoids, transition metals, post-transition metals and metalloids. As an example, SiCl₄ may be mentioned without being limited thereto.

Thus, according to a preferred embodiment, the dopant metal M^{X+} in the formula Sn(CN₂):M^{X+} is preferably at least one selected from the group consisting of RE activator ions (Sc³⁺, Y³⁺, Ce³⁺, Pr³⁺, Nd³⁺, Sm³⁺, Eu³⁺, Eu²⁺, Gd³⁺, Tb³⁺, Dy³⁺, Ho³⁺, Er³⁺, Tm³⁺, and Yb³⁺), transition metals (particularly Ni²⁺, Mn²⁻⁷⁺, Fe²⁺, Fe³⁺, Co²⁺, Cu¹⁺, Cu²⁺, and Zn²⁺), Mg (Mg²⁺), Si (Si⁴⁺) and SiCl₄.

Besides, the inventor has surprisingly found that Sn(CN₂) can be doped with several ions, even at the same time. Thus, according to a preferred embodiment of the present invention, the carbodiimide compound Sn(CN₂):M^{X+} (hereinafter also referred to as "doped Sn(CN₂)") includes two or more different dopants (M^{X+}). According to this embodiment, the at least two different dopants are preferably selected from the group consisting of Sc, Y, Ce, Pr, Nd, Sm, Eu, Gd, Tb, Dy, Ho, Er, Tm, and Yb.

Preferably, the concentration of the dopant (M^{X+}) is in the range of 1 to 30 mol-% based on Sn(CN₂).

In another aspect, the present invention provides a method for producing the doped Sn(CN₂) according to the present invention, which comprises the step of doping Sn(CN₂) with at least one dopant (M^{X+}) at an elevated temperature of at least 400°C.

Further, the present invention provides a method for producing Sn(CN₂), which comprises the step of reacting a Sn(IV) compound with urea (CO(NH₂)₂) under an NH₃ atmosphere at an elevated temperature of at least 300°C.

According to the present invention, Sn(CN₂) or the doped Sn(CN₂) can be used as an electrode material in energy storage systems, or as a phosphor material in light-emitting diodes (LEDs). Preferably, the energy storage system is an alkali-metal ion battery, or a hybrid alkali-metal ion battery or a hybrid capacitor. Among those systems, Sn(CN₂) or the doped Sn(CN₂) is particularly useful as an electrode material in beyond lithium-ion batteries or a lithium-ion battery (LIB). Beyond lithium ion batteries encompass sodium/sodium-ion batteries, potassium/potassium-ion batteries, calcium/calcium-ion batteries, magnesium/magnesium-ion batteries, aluminum/aluminum-ion batteries, and zinc/zinc-ion batteries as well as corresponding alkali-metal-air batteries.

In another aspect, the present invention provides a multicolored LED, which comprises at least two different luminescent hosts, wherein the at least two different luminescent hosts each comprise Sn(CN₂):M^{X+}, including two or more different dopants (M^{X+}) selected from the group consisting of Sc, Y, Ce, Pr, Nd, Sm, Eu, Gd, Tb, Dy, Ho, Er, Tm, and Yb.

The present invention is based on a novel approach for preparing Sn(CN₂), namely by a low temperature synthesis using a soft urea route, which comprises the step of reacting a Sn(IV) compound (such as tin (IV) chloride pentahydrate (SnCl₄·5 H₂O)) with urea (CO(NH₂)₂) under an NH₃ atmosphere at an elevated temperature of at least 300°C.

According to the present invention, it was found that the thus obtained carbodiimide Sn(CN₂) (also referred to as SnCN₂) in pure form shows electrochemical activity and reversible electrochemical lithiation and delithiation. This will enlarge the circle of possible materials for lithium and post-lithium ion batteries tremendously.

In addition, according to the present invention, it was surprisingly found that pure Sn(CN₂) can be subsequently doped with a dopant metal (M^{X+}), resulting in a distinct improvement of the battery capacity. This also facilitates a multitude of degrees of freedom to customize and adapt a battery material to special needs. This is even more important as for the search of novel transition metal carbodiimides the right synthetic conditions are often very challenging.

Besides, as mentioned above, phosphors are usually doped with Eu²⁺, and only one activator ion is used. Therefore, one host shows one color. The fact that one host can be doped with e.g. several rare-earth activator ions, even at the same time, is an absolutely new approach, enabling host materials having different colors. Based thereon, structural problems inside the LED setup caused by different luminescent hosts can be avoided by using only one material. This will be a large benefit for the development of modern LED phosphors, since more colors can be realized with just one host material. Until now, a new host material was required for each color. Furthermore, the construction of an LED can be simplified massively, since the individual color layers essentially consist of one material, and thus no more problems arise by different coefficients of thermal expansion and grid bias voltages.

The present invention including preferred embodiments will now be described in more detail along with the accompanying figures. The figures show:
- Fig. 1:: CIE diagram and colors of Sn(CN)₂ doped with a) Tb³⁺, b) Eu³⁺ and Tb³⁺, and c) Eu³⁺,
- Fig. 2:: Excitation (black) and emission spectra (colored) of Sn(CN)₂ doped with (a) Eu³⁺ (red), (b) Tb³⁺ (green), and (c) Eu³⁺ and Tb³⁺ (orange).
- Fig. 3:: (a) First galvanostatic cycling of undoped Sn(CN)₂ vs Li⁺ | Li, and (b) after 200 cycles.
- Fig. 4:: Cycle stability of undoped Sn(CN)₂ vs Li⁺ | Li.
- Fig. 5:: (a) Galvanostatic cycling and (b) cyclic voltammogram of undoped Sn(CN)₂ vs Li⁺ | Li, (c) galvanostatic cycling and (d) cyclic voltammogram of Ni doped Sn(CN)₂ vs Li⁺ | Li.
- Fig. 6:: (a) Galvanostatic cycling and (b) cyclic voltammogram of Co doped Sn(CN)₂ vs Li⁺ | Li, (c) galvanostatic cycling and (d) cyclic voltammogram of Fe doped Sn(CN)₂ vs Li⁺ | Li.

As mentioned above, the present invention is based on a novel approach for preparing Sn(CN₂), namely by a low temperature synthesis using a soft urea route. According to the present invention, Sn(CN₂) can be obtained by reacting a Sn(IV) compound with urea under an NH₃ atmosphere at an elevated temperature of at least 300°C. Preferably, the reaction temperature is set to at least 350°C, more preferably to at least 400°C.

The Sn(IV) compound is not specifically limited and can be chosen e.g. from halogenated tin compounds, such as tin (IV) chloride pentahydrate (SnCl₄·5 H₂O, available from Sigma Aldrich). The reaction may be carried out in a solvent, preferably in a polar solvent, such as a C1-C6 alcohol. In particular, methanol, ethanol, propanol etc. may be mentioned as suitable solvents.

According to a non-limiting example, Sn(CN₂) can be obtained by adding tin (IV) chloride pentahydrate powder (SnCl₄·5 H₂O, ≥ 99%, Sigma Aldrich) to ethanol in order to obtain a stable and clear solution. The addition of urea (≥ 99%, Sigma Aldrich) to the alcoholic solution provides a clear solution upon stirring. This precursor solution can be treated under an NH₃ atmosphere at 350 to 550°C for 2 h at a heating rate of 10°C/min, for instance. Subsequent cooling to room temperature in an argon (Ar) atmosphere (20 ml/min) provides the desired Sn(CN₂).

Of course, this reaction is neither limited to that specific temperature, nor to the specific compounds, but is applicable to other materials and temperatures.

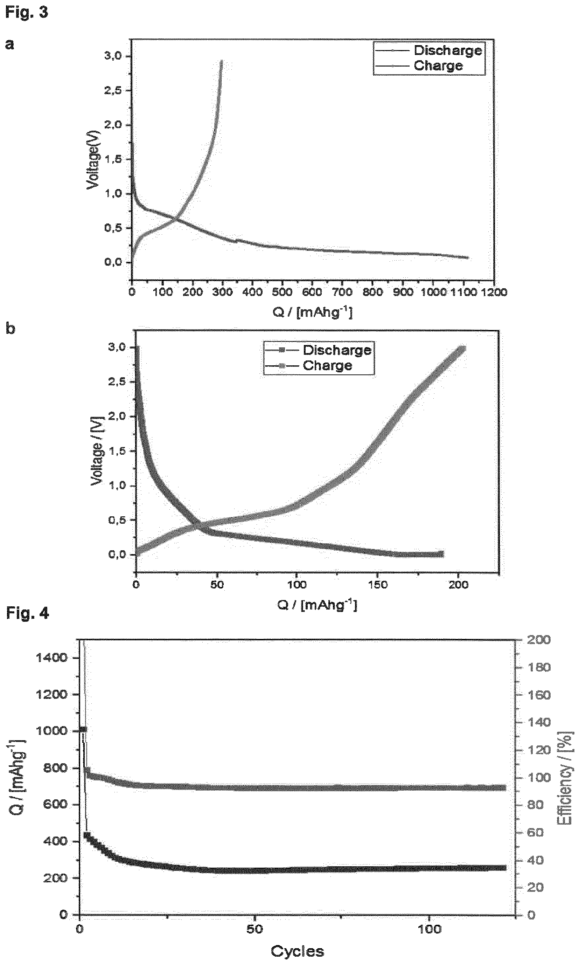

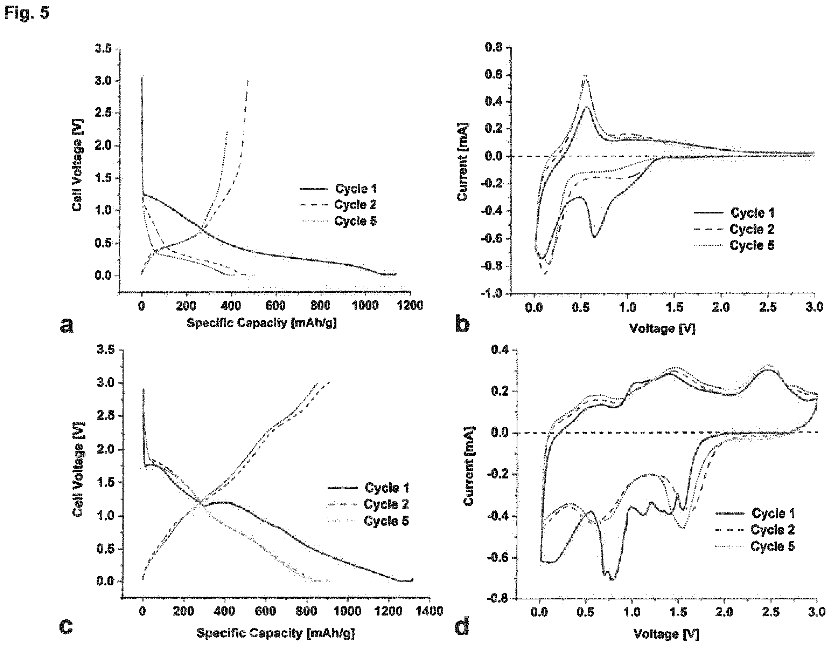

The voltage profile observed during galvanostatic cycling of undoped Sn(CN₂) with respect to Li⁺ | Li in the voltage range between 3.0 V and 0.01 V is shown in Fig. 3 and 5a. During the first discharge (cf. Fig. 3a and 5a), two regimes are visible in this voltage profile. At the beginning, a first sloping plateau occurs between 1.3 V and 0.5 V with a length of 350 mAh/g, corresponding to conversion of 2.2 Li per formula unit Sn(CN₂). Subsequently, a long second plateau is observed. This plateau has a smaller slope, but still a clear inclination, and its length of 750 mAh/g corresponds to conversion of additional 4.8 Li. During the first charge to 3.0 V, a specific capacity of 300 mAh/g is obtained. This reveals a high irreversible capacity of about 800 mAh/g in the first discharge, and the reversible contribution is only 27% (about two Li per formula unit). During further cycling, the two contributions in the discharge voltage profile are still clearly visible as can be taken from cycles 2 and 5 in Figure 5a. This also applies even after 200 cycles as shown in Fig. 3b, and the reversible specific capacity stabilizes at 230 mAh/g with a Coulombic efficiency of 97% as shown in Fig. 4.

The cyclic voltammogram of Fig. 5b also reveals two redox processes in agreement with the galvanostatic measurements. The main contribution is visible at 0.13 V/0.54 V and a second, broader contribution occurs around 1.0 V. In addition, in the first cycle, another reduction process is visible at 0.65 V which can be assigned to formation of the solid-electrolyte interphase (SEI).

The above results demonstrate that undoped Sn(CN₂) can be used as a negative electrode (anode) material in energy storage systems, since said carbodiimide compound shows electrochemical activity and reversible electrochemical lithiation and delithiation. In particular, the above investigations show that the undoped Sn(CN₂) has very good cycling properties over a large cycle number which have never been reported before. Thus, the undoped Sn(CN₂) can be suitably used in highly efficient energy storage systems, particularly in an alkali-metal ion battery such as in beyond lithium-ion batteries (Na, K, Ca, Mg, Al, Zn) or a lithium-ion battery. In addition, the undoped Sn(CN₂) can be suitably used in a hybrid alkali-metal ion battery, or a hybrid capacitor.

According to the present invention, it has further been found that pure Sn(CN₂) can be subsequently doped with a dopant metal (M^{X+}). As mentioned above, in literature there can be found several oxo/carbodiimides or cyanamides doped with rare-earth (RE) activator ions, i.e. RE²⁺ as well as RE³⁺ (cf. for instance S. Yuan et al., Ceram. Int., 2017, 43, 16018-16022). However, a relevant point here is that the doping ion is inserted during the main synthesis and not afterwards. Normally doping is performed with Eu²⁺ and only one activator ion is used. Therefore, one host shows one color.

According to the present invention, it has surprisingly been found that Sn(CN₂) can be selectively doped by a subsequent combustion synthesis as will be described in more detail below. The method for producing the doped Sn(CN₂) according to the present invention comprises the step of doping Sn(CN₂) with at least one dopant (M^{X+}) at an elevated temperature of at least 400°. That is, contrary to the above-mentioned state of the art, doping with activator ions is not carried out during the main synthesis of the carbodiimide. Here, it should be noted that such attempts merely result in metallic Sn and Sn₃N₄, but not in doped Sn(CN₂). By subsequently doping Sn(CN₂), it is possible to produce the carbodiimide compound of the formula Sn(CN₂):M^{X+}.

As mentioned above, according to the present invention, the dopant metal is selected from alkaline earth metals, lanthanoids, actinoids, transition metals, post-transition metals and metalloids. The doping of SnCN₂ can be carried out by a successive combustion synthesis in which the respective halogenated dopant metal(s) will be mixed with Sn(CN₂) and heated to at least 400°C. For instance, it is preferred to use the corresponding metal chlorides which are commonly in powder form. As long as SiCl₄ doped Sn(CN₂) is concerned, liquid SiCl₄ can be similarly mixed with Sn(CN₂).

For the combustion synthesis, it is preferred to carry out the doping in the presence of a low explosive material, such as a nitrogen-based fuel. For instance, the mixture of Sn(CN₂) and the halogenated dopant metal(s) may be combined with an aqueous urea ammonium nitrate solution, which is to be heated to at least 400°C. Preferably, the reaction temperature is set to at least 450°C, more preferably to at least 500°C.

The molar ratio of Sn(CN₂) and the dopant metal(s) is not specifically limited. Preferably, however, the concentration of the dopant metal(s) is in the range of 1 to 30 mol-% based on Sn(CN₂), more preferably 5 to 20 mol-%. Accordingly, the dopant metal(s) are preferably mixed with Sn(CN₂) in an amount so that the content of the dopant metal(s) in the doped Sn(CN)₂ is in the aforementioned range, for instance in an about equimolar amount.

Doping of Sn(CN₂) with such a dopant metal opens up a multitude of degrees of freedom to customize and adapt a battery material to special needs for their applicability in lithium ion batteries as well as in post-lithium ion energy storage systems, such as beyond lithium-ion batteries (Na, K, Ca, Mg, Al, Zn), hybrid alkali-metal ion batteries, or hybrid capacitors. This is even more important as for the search of novel transition metal carbodiimides the right synthetic conditions are often very challenging. As shown in the experimental section, this doping improves the capacity enormously.

Concerning the luminescence of doped Sn(CN₂), a large benefit is that one host can deliver several colors. Normally, doping is performed with Eu²⁺ and only one activator ion is used, and thus one host shows only one color.

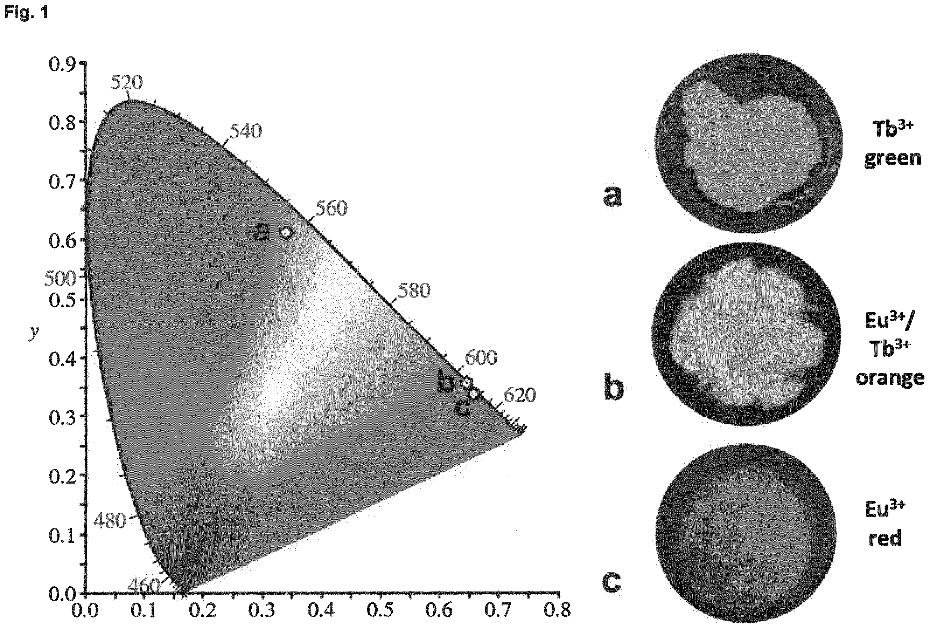

The fact that one host can be doped with different dopant metals, even at the same time, is absolutely new, resulting in the fact that one host can deliver different colors as it is also shown in Fig. 1. By this fact, structural problems inside the LED setup caused by different luminescent hosts can be avoided by using only one material. This will be a large benefit for the development of modern LED phosphors.

The present invention will be further illustrated in the following examples without being limited thereto.

### Examples

### Synthesis of Sn(CN2)

Sn(CN₂) was prepared by a low temperature synthesis using a soft urea route. The precursor was obtained by adding 2-6 g of tin (IV) chloride pentahydrate (SnCl₄·5 H₂O, ≥ 99%, Sigma Aldrich) powder to 4-8 ml ethanol in order to obtain the targeted concentration and form a stable and clear solution. Then, 2 g of urea (≥99%, Sigma Aldrich) were added to the alcoholic solution. This mixture was stirred until the urea was completely dissolved and became a clear solution. The precursor was then put into an oven and treated under a NH₃ atmosphere (100 ml/min) at 350 to 550°C (10°C/min) for 2 h. Subsequently, the sample was cooled down to room temperature in Ar atmosphere (20 ml/min).

### Doping of Sn(CN₂)

The doping of Sn(CN₂) was realized by a successive combustion synthesis. Therefore, the respective metal chlorides (such as MCl₂ or MCl₃, equimolar amount with respect to Sn(CN₂)), NH₄NO₃ (40 mg), urea (900 mg) and 5 ml H₂O were added to the sample of Sn(CN₂) (1 mol). This mixture was put into an oven at 400 to 600°C for 10 min.

### Luminescence measurements

Carbodiimide compounds are considered to be efficient host candidates for rare-earth activator ions such as Eu³⁺ and Tb³⁺. Eu³⁺ is considered as an important activator ion with red emission corresponding to the transition of ⁵D₀ → ⁷F_{J} (J = 1-6). The emission of Tb³⁺ is due to the transition between the emitting states of ⁵D_{J} and the excited states of ⁷F_{J}, and the main intense green emission is attributed to the transition of ⁵D₄- ⁷F₅ which is located at ca. 543 nm.

Fig. 1 shows the CIE diagram and colors of Sn(CN₂) doped with Eu³⁺ and Tb³⁺ proving that a color tuning of one host with different activator ions is possible. In addition, it has been proven that Sn(CN₂) was doped with different dopant metals (Eu³⁺ and Tb³⁺) at the same time.

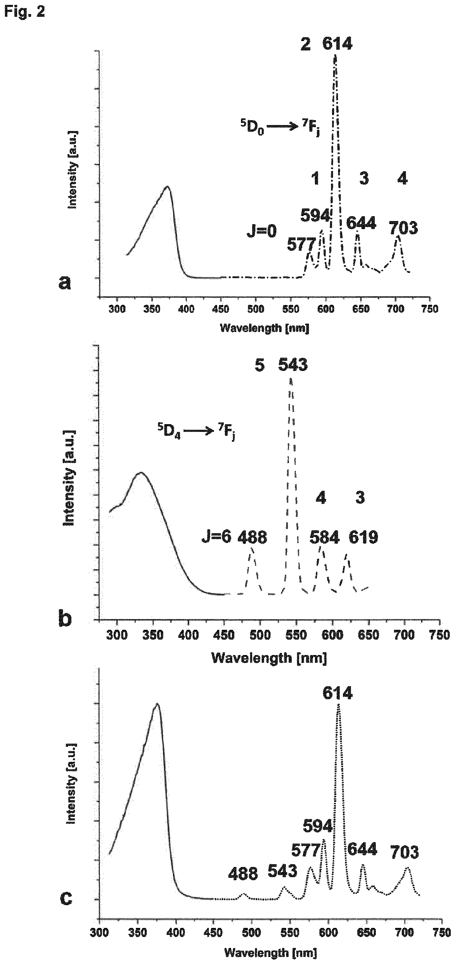

Fig. 2a shows that in the emission spectrum of Sn(CN₂) doped with Eu³⁺, the transitions ⁵D₀ → ⁷F₀ and ⁷F₃ seem to be more intense than usually. The ⁵D₀ → ⁷F₃ transition is even greater than the ⁵D₀ → ⁷F₄ transition, which is not common. This means a strong J-mixing and a strong crystal-field perturbation in this matrix. The ⁵D₀ → ⁷F₀ transition is also broad, indicating the location of Eu³⁺ ions in several sites (cf. Fig. 2a).

Fig. 2b illustrates the excitation (monitored at 543 nm) and emission spectra of Tb³⁺ doped Sn(CN₂). The excitation spectrum exhibits a broad and intense band in the range from 280 to 370 nm with a peak at around 334 nm. This broad band is attributed to 4f⁸ → 4f⁷5d¹ transitions of the Tb³⁺ ions.

The strongest peak is at 543 nm corresponding to the ⁵D₄ → ⁷F₅ transition, while the peaks at 488 nm, 494 nm, 584 nm and 619 nm, respectively, originate from the ⁵D₄ → ⁷F₆, ⁵D₄ → ⁷F₄, and ⁵D₄ → ⁷F₃ transitions of the Tb³⁺ ions.

Fig. 2c proves that it is possible to insert two different activator ions in one host showing the typical bands of Eu³⁺ as well as Tb³⁺ resulting in an orange body color.

### Battery measurements

The voltage profile observed during galvanostatic cycling of undoped Sn(CN₂) with respect to Li⁺ | Li in the voltage range between 3.0 V and 0.01 V is shown in Figs. 3 and 5a. During the first discharge (cf. Figs. 3a and 5a), two regimes are visible in this voltage profile. At the beginning, a first sloping plateau occurs between 1.3 V and 0.5 V with a length of 350 mAh/g, corresponding to conversion of 2.2 Li per formula unit Sn(CN₂). Subsequently, a long second plateau is observed. This plateau has a smaller slope, but still a clear inclination, and its length of 750 mAh/g corresponds to conversion of additional 4.8 Li. During the first charge to 3.0 V, a specific capacity of 300 mAh/g is obtained. This reveals a high irreversible capacity of about 800 mAh/g in the first discharge, and the reversible contribution is only 27% (about two Li per formula unit). During further cycling, the two contributions in the discharge voltage profile are still clearly visible as can be taken from cycles 2 and 5 in Figure 5a. This also applies even after 200 cycles as shown in Fig. 3b, and the reversible specific capacity stabilizes at 230 mAh/g with a Coulombic efficiency of 97% as shown in Fig. 4.

The cyclic voltammogram of Fig. 5b also reveals two redox processes in agreement with the galvanostatic measurements. The main contribution is visible at 0.13 V/0.54 V and a second, broader contribution occurs around 1.0 V. In addition, in the first cycle, another reduction process is visible at 0.65 V which can be assigned to formation of the solid-electrolyte interphase (SEI).

For the Ni doped Sn(CN₂), the galvanostatic cycling and the cyclic voltammogram are shown in Figs. 5c and 5d, respectively. In comparison to the undoped Sn(CN)₂, it becomes obvious that additional processes are present, which can be assigned to the redox activity of Ni. In the cyclic voltammogram, two strong processes are visible at 0.63 V/1.45 V and 1.63 V/2.5 V. Overall, the specific capacity and also the cyclic stability are significantly increased by the doping with Ni as shown in Fig. 5d. The reversible specific discharge capacity is increased to 800 mAh/g, which corresponds to reversible cycling of 5 Li per formula unit Sn(CN)₂.

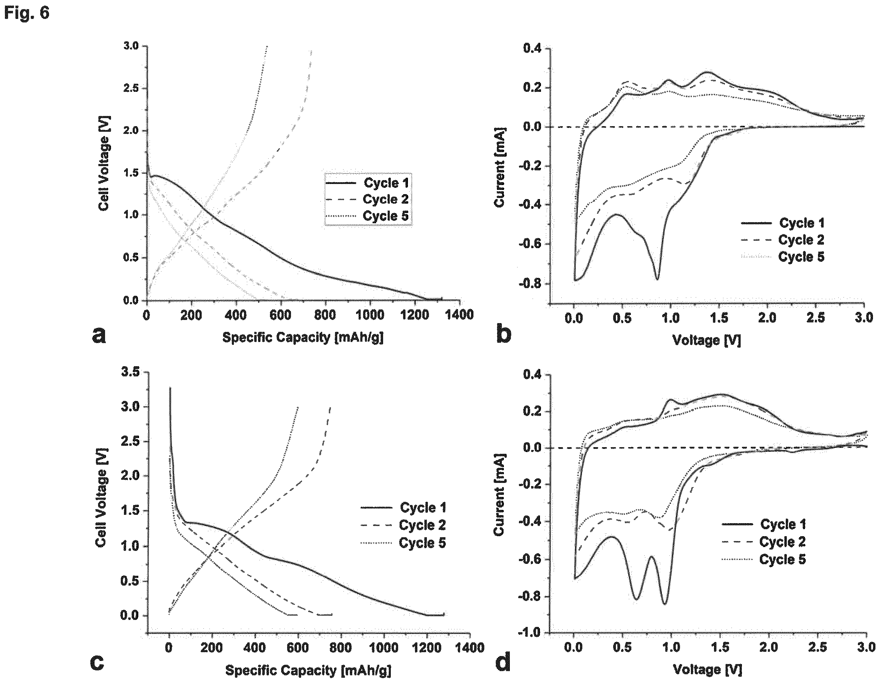

Similar results were obtained when Sn(CN)₂ was doped with Co, Fe, Mg, Zn, Si, SiCl₄ and Mg demonstrating that the doping can influence and improve the cycling behavior of Sn(CN)₂. A respective galvanostatic cycling and cyclic voltammogram of Co doped Sn(CN)₂ vs Li⁺ | Li are shown in Figs. 6 a and b, whereas a galvanostatic cycling and cyclic voltammogram of Fe doped Sn(CN)₂ vs Li⁺ | Li are shown in Figs. 6(c) and (d).

## Claims

1. A carbodiimide compound of the following formula Sn(CN₂):M^{X+}, which is Sn(CN₂) doped with at least one dopant (M^{X+}), wherein the at least one dopant is selected from alkaline earth metals, lanthanoids, actinoids, transition metals, post-transition metals and metalloids, and wherein X+ represents the oxidation state of the dopant.

2. The carbodiimide compound according to claim 1, wherein the dopant is at least one rare earth (RE) activator ion selected from the group consisting of Sc, Y, Ce, Pr, Nd, Sm, Eu, Gd, Tb, Dy, Ho, Er, Tm, and Yb in its corresponding oxidation state.

3. The carbodiimide compound according to claim 1, wherein the dopant is at least one element selected from the group consisting of Mg, Si, Mn, Fe, Co, Ni, Cu, and Zn in its corresponding oxidation state.

4. The carbodiimide compound according to any one of claims 1 to 3, which includes two or more different dopants (M^{X+}).

5. The carbodiimide compound according to claim 4, wherein the dopants are selected from the group consisting of Sc, Y, Ce, Pr, Nd, Sm, Eu, Gd, Tb, Dy, Ho, Er, Tm, and Yb.

6. The carbodiimide compound according to any one of claims 1 to 5, wherein the concentration of the dopant (M^{X+}) is in the range of 1 to 30 mol-% based on Sn(CN₂).

7. A method for producing the carbodiimide compound according to any one of claims 1 to 6, which comprises the step of doping Sn(CN₂) with at least one dopant (M^{X+}) at an elevated temperature of at least 400°C.

8. A method for producing Sn(CN₂), which comprises the step of reacting a Sn(IV) compound with urea (CO(NH₂)₂) under an NH₃ atmosphere at an elevated temperature of at least 300°C.

9. Use of Sn(CN₂) or the doped carbodiimide compound of the following formula Sn(CN₂):M^{X+} according to any one of claims 1 to 6 as an electrode material in energy storage systems.

10. The use according to claim 9, wherein the energy storage system is an alkali-metal ion battery such as beyond lithium ion batteries (Na, K, Ca, Mg, Al, Zn) or a lithium-ion battery, or a hybrid alkali-metal ion battery, or a hybrid capacitor.

11. Use of Sn(CN₂) or the doped carbodiimide compound of the following formula Sn(CN₂):M^{X+} according to any one of claims 1 to 6 as a phosphor material in light-emitting diodes (LEDs).

12. A multicolored light-emitting diode (LED), comprising at least two different luminescent hosts, wherein the at least two different luminescent hosts each comprises Sn(CN₂):M^{X+}, including two or more different dopants (M^{X+}) selected from the group consisting of Sc, Y, Ce, Pr, Nd, Sm, Eu, Gd, Tb, Dy, Ho, Er, Tm, and Yb.

## Patentansprüche

1. Carbodiimid-Verbindung der folgenden Formel Sn(CN₂):M^{X+}, welche Sn(CN₂) dotiert mit mindestens einem Dotiermittel (M^{X+}) ist, wobei das mindestens eine Dotiermittel aus Alkali-Erdmetallen, Lanthanoiden, Actinoiden, Übergangsmetallen, Post-Übergangsmetallen und Metalloiden ausgewählt ist, und wobei X+ den Oxidationszustand des Dotiermittels darstellt.

2. Carbodiimid-Verbindung gemäß Anspruch 1, wobei das Dotiermittel mindestens ein Seltenerd (RE)-Aktivatorion, ausgewählt aus der Gruppe, bestehend aus Sc, Y, Ce, Pr, Nd, Sm, Eu, Gd, Tb, Dy, Ho, Er, Tm und Yb in deren entsprechendem Oxidationszustand, ist.

3. Carbodiimid-Verbindung gemäß Anspruch 1, wobei das Dotiermittel mindestens ein Element ist, ausgewählt aus der Gruppe, bestehend aus Mg, Si, Mn, Fe, Co, Ni, Cu, und Zn in deren entsprechendem Oxidationszustand.

4. Carbodiimid-Verbindung gemäß einem der Ansprüche 1 bis 3, welche zwei oder mehrere unterschiedliche Dotiermittel (M^{X+}) einschließt.

5. Carbodiimid-Verbindung gemäß Anspruch 4, wobei die Dotiermittel aus der Gruppe, bestehend aus Sc, Y, Ce, Pr, Nd, Sm, Eu, Gd, Tb, Dy, Ho, Er, Tm und Yb, ausgewählt sind.

6. Carbodiimid-Verbindung gemäß einem der Ansprüche 1 bis 5, wobei die Konzentration des Dotiermittels (M^{X+}) in dem Bereich von 1 bis 30 mol-% bezogen auf Sn(CN₂) ist.

7. Verfahren zur Herstellung der Carbodiimid-Verbindung gemäß einem der Ansprüche 1 bis 6, welches den Schritt des Dotierens von Sn(CN₂) mit mindestens einem Dotiermittel (M^{X+}) bei einer erhöhten Temperatur von mindestens 400°C umfasst.

8. Verfahren zur Herstellung von Sn(CN₂), welches den Schritt des Umsetzens einer Sn(IV)-Verbindung mit Harnstoff (Co(NH₂)₂) unter einer NH₃ Atmosphäre bei einer erhöhten Temperatur von mindestens 300°C umfasst.

9. Verwendung von Sn(CN₂) oder der dotierten Carbodiimid-Verbindung der folgenden Formel Sn(CN₂):M^{X+} gemäß einem der Ansprühe 1 bis 6 als ein Elektrodenmaterial in Energiespeichersystemen.

10. Verwendung gemäß Anspruch 9, wobei das Energiespeichersystem eine Alkalimetallionenbatterie wie Beyond-Lithiumionenbatterien (Na, K, Ca, Mg, Al, Zn) oder eine Lithiumionenbatterie oder eine Hybrid-Alkalimetallionenbatterie oder ein Hybridkondensator ist.

11. Verwendung von Sn(CN₂) oder der dotieren Carbodiimid-Verbindung der folgenden Formel: Sn(CN₂):M^{X+} gemäß einem der Ansprüche 1 bis 6 als ein Phosphormaterial in Licht-emittierenden Dioden (LEDs).

12. Mehrfarbige Licht-emittierende Diode (LED), umfassend mindestens zwei unterschiedliche lumineszierende Wirte, wobei die mindestens zwei unterschiedlichen lumineszierenden Wirte jeweils Sn(CN₂):M^{X+} umfassen, einschließlich zwei oder mehrere unterschiedliche Dotiermittel (M^{X+}), ausgewählt aus der Gruppe, bestehend aus Sc, Y, Ce, Pr, Nd, Sm, Eu, Gd, Tb, Dy, Ho, Er, Tm und Yb.

## Revendications

1. Composé carbodiimide de la formule Sn(CN₂):M^{X+}, qui est un Sn(CN₂) dopé par au moins un dopant (M^{X+}), où l'au moins un dopant est choisi parmi des métaux alcalino-terreux, des lanthanoïdes, des actinoïdes, des métaux de transition, des métaux post-transition et des métalloïdes, et dans lequel X+ représente le degré d'oxydation du dopant.

2. Composé carbodiimide selon la revendication 1, dans lequel le dopant est au moins un ion activateur terre rare (TR) choisi parmi le groupe consistant en Sc, Y, Ce, Pr, Nd, Sm, Eu, Gd, Tb, Dy, Ho, Er, Tm et Yb en son degré d'oxydation correspondant.

3. Composé carbodiimide selon la revendication 1, dans lequel le dopant est au moins un élément choisi parmi le groupe consistant en Mg, Si, Mn, Fe, Co, Ni, Cu et Zn en son degré d'oxydation correspondant.

4. Composé carbodiimide selon l'une quelconque des revendications 1 à 3, qui comprend deux dopants différents (M^{X+}) ou plus.

5. Composé carbodiimide selon la revendication 4, dans lequel les dopants sont choisis parmi le groupe consistant en Sc, Y, Ce, Pr, Nd, Sm, Eu, Gd, Tb, Dy, Ho, Er, Tm et Yb.

6. Composé carbodiimide selon l'une quelconque des revendications 1 à 5, dans lequel la concentration en dopant (M^{X+}) se situe dans l'intervalle allant de 1 à 30% en moles sur base du Sn(CN₂).

7. Procédé de production du composé carbodiimide selon l'une quelconque des revendications 1 à 6, qui comprend l'étape de dopage du Sn(CN₂) avec au moins un dopant (M^{X+}) à une température élevée d'au moins 400°C.

8. Procédé de production de Sn(CN₂), qui comprend l'étape de réaction d'un composé de Sn (IV) avec de l'urée (CO(NH₂)₂) sous une atmosphère de NH₃ à une température élevée d'au moins 300°C.

9. Utilisation du Sn(CN₂) ou du composé carbodiimide dopé de la formule Sn(CN₂):M^{X+} selon l'une quelconque des revendications 1 à 6, comme matériau d'électrode dans des systèmes de stockage d'énergie.

10. Utilisation selon la revendication 9, dans lequel le système de stockage d'énergie est une batterie ion de métal alcalin comme des batteries à ion au-delà du lithium (Na, K, Ca, Mg, Al, Zn) ou une batterie à lithium-ion, ou une batterie hybride à ion de métal alcalin, ou un condensateur hybride.

11. Utilisation du Sn(CN₂) ou du composé carbodiimide dopé de la formule Sn(CN₂):M^{X+} selon l'une quelconque des revendications 1 à 6, comme matériau phosphorescent dans des diodes électroluminescentes (DEL).

12. Diode électroluminescente (DEL) multicolore, comprenant au moins deux hôtes luminescents différents, dans laquelle les au moins deux hôtes luminescents différents comprennent chacun Sn(CN₂):M^{X+}, comprenant deux dopants différents (M^{X+}) ou plus choisis parmi le groupe consistant en Sc, Y, Ce, Pr, Nd, Sm, Eu, Gd, Tb, Dy, Ho, Er, Tm et Yb.
